# EUROPÄISCHE PATENTSCHRIFT

(11) **EP 2 607 182 B1**
(45) Veröffentlichungstag und Bekanntmachung des Hinweises auf die Patenterteilung: **04.03.2015**
(21) Anmeldenummer: 13159995.3
(22) Anmeldetag: 22.12.2005
(51) Int. Cl.: B60R 21/26, B60R 21/20

(54) **Gassackmodul**
Air bag module
Module d'airbag

(30) Priorität: 21.01.2005 DE 202005000999 U; 25.05.2005 DE 102005024113
(43) Veröffentlichungstag der Anmeldung: 26.06.2013
(62) Teilanmeldung aus: 07023295.4
(73) Patentinhaber: TRW Automotive Safety Systems GmbH, 63743 Aschaffenburg (DE)
(72) Erfinder: Schneider, Michael, 63834 Sulzbach (DE)
(74) Vertreter: Mehnert, Bernhard

(56) Entgegenhaltungen:
- EP-A1- 0 586 131
- DE-A1- 19 813 832
- US-A- 5 865 466
- US-A1- 2003 214 124

## Beschreibung

Die vorliegende Erfindung betrifft ein Gassackmodul gemäss Oberbegriff der Ansprüche 1 und 2.

Für gewöhnlich soll bei einem Gassackmodul eines Fahrzeuginsassen-Rückhaltesystems der Gassack mit dem von einem Gasgenerator erzeugten Gas möglichst schnell befüllt werden. In bestimmten Fällen, beispielsweise bei einer Kollision mit vergleichsweise geringer Geschwindigkeit oder in Abhängigkeit von der Grösse, dem Gewicht oder der Position eines zu schützenden Fahrzeuginsassen, ist es jedoch wünschenswert, einen weicheren Gassack zur Verfügung zu stellen. Zu diesem Zweck können beispielsweise Abströmöffnungen im Modulgehäuse vorgesehen sein, durch die ein Teil des verfügbaren Gasvolumens ausströmen kann. Diese Lösung hat jedoch den Nachteil, dass Bauraum im Modulgehäuse für die Abströmöffnung selbst sowie einen möglichen Öffnungsmechanismus vorgehalten werden muss..

Eine weitere, seit langem bekannte Möglichkeit zur Erzielung eines verringerten Gassackinnendrucks besteht darin, in der Wandung des nicht aufgeblasenen Gassacks eine Falte vorzusehen, indem gegenüberliegende Wandungsabschnitte aneinander anliegen, wobei die Falte durch eine Reissnaht fixiert wird. Steigt nun nach Aktivierung des Gassackmoduls der Gassackinnendruck über einen vorbestimmten Wert, so reisst die Reissnaht auf, wodurch sich das Volumen des Gassacks vergrössert und der Gassackinnendruck verringert. Auch ist es bekannt, im Bereich der Falte eine Abströmöffnung vorzusehen, die zunächst durch die Falte verschlossen und nach dem Reissen der Reissnaht freigelegt ist, wodurch eine weitere Absenkung des Gassackinnendrucks erreicht werden kann.

Nachteilig an der bekannten Ausgestaltung ist, dass mit ihr keine situationsabhängige Anpassung des Gassackinnendrucks möglich ist. Die Reissnaht wird in jedem Fall genau dann reissen, wenn der durch die Eigenschaften der Reissnaht fest vorgegebene Gassackinnendruck erreicht ist. Daneben ist beispielsweise in der US 2003/0214124 A1 ein Gassackmodul der eingangs genannten Art gezeigt.

Demgegenüber schafft die Erfindung ein Gassackmodul, das eine rasche Verringerung des Gassackinnendrucks in Abhängigkeit von der aktuellen Unfall- bzw. Fahrzeug(insassen)situation ermöglicht und sich dennoch durch einen geringen Platzbedarf sowie eine einfache Herstellbarkeit auszeichnet.

Dies wird durch ein Gassackmodul mit den jeweils kennzeichnenden Merkmalen der Ansprüche 1 und 2 erreicht. Durch die gezielte, von aussen gesteuerte Lösbarkeit des aktiven Haltemittels ist also gewährleistet, dass unabhängig vom Gassackinnendruck eine Reduzierung des Gassackinnendrucks durch Überführung des Gassacks aus dem ersten in den zweiten Zustand nur dann erfolgt, wenn dies wirklich gewünscht ist. So kann im Fall einer Kollision mit hoher Geschwindigkeit oder eines besonders schweren Fahrzeuginsassen ein notwendiger hoher Gassackinnendruck und damit ein härterer Gassack aufrechterhalten werden, während bei einem Zusammenstoss mit geringerer Geschwindigkeit oder im Fall eines leichteren Fahrzeuginsassen ein weicherer Gassack zur Verfügung gestellt wird. Zudem wird die gewünschte Reduzierung des Gassackinnendrucks auch zeitlich vom Verlauf des Gassackinnendrucks entkoppelt, wodurch sich ein System ergibt, das variabel auf verschiedenste Situationen einstellbar ist.

Gemäss einer bevorzugten Ausführungsform umfasst das Haltemittel ein Antriebsmittel, bei dem es sich vorteilhaft um ein pyrotechnisches Antriebsmittel handelt. Dies ermöglicht ein besonders rasches Entfalten der Falte und eine schnelle Verringerung des Gassackinnendrucks, sofern diese notwendig ist.

Gemäß einer erfindungsgemäßen Ausführungsform weist das Haltemittel einen Sprengbolzen auf, bei dem es sich vorzugsweise um einen einfach aufgebauten und günstig verfügbaren Massenartikel handelt.

Das Haltemittel kann einen Klemmbügel aufweisen, der die Falte in der Gassackwandung fixiert und bei Bedarf gelöst wird.

Vorteilhaft ist wenigstens ein Fangelement vorgesehen, über das ein bei Aktivierung abgetrennter Teil des Haltemittels mit dem Modul verbunden ist. Dadurch wird das Umherfliegen loser Teile verhindert.

Das Haltemittel greift bevorzugt unmittelbar an einem der die Falte bildenden Abschnitte der Wandung an. Dabei kann es sich insbesondere um den in Bezug auf den ersten Zustand des Gassacks innenliegenden Wandungsabschnitt handeln.

Vorteilhaft ist das Haltemittel an einem starren Lagerteil befestigt, wodurch eine besonders sichere Anbringung gewährleistet ist.

Bei dem Lagerteil handelt es sich vorzugsweise um einen Gasgeneratorträger des Gassackmoduls. Dies bietet den Vorteil, dass sich das Gassackmodul als vormontierte Einheit ausbilden lässt, die auf einfache und damit kostengünstige Weise komplett in das Fahrzeug eingesetzt werden kann.

Gemäss einer bevorzugten Ausführungsform weist der entfaltete Gassack im zweiten Zustand ein grösseres Volumen auf als im ersten Zustand. Je nach Volumenunterschied zwischen dem ersten und zweiten Zustand kann dadurch bereits eine ausreichende Verringerung des Gassackinnendrucks erzielt werden.

Gemäss einer weiteren Ausführungsform weist die Gassackwandung im Bereich der Falte wenigstens eine Abströmöffnung auf, die vorteilhaft im ersten Zustand des Gassacks durch die Falte verschlossen ist und im zweiten Zustand des Gassacks freigegeben werden kann. So ergibt sich eine noch umfangreichere und kontinuierlich erfolgende Druckverringerung.

Die Gassackwandung kann im ersten Zustand des Gassacks auch mehrere Falten aufweisen. Dadurch werden ein besonders grosser Volumenunterschied und damit eine rasche Druckverringerung zwischen dem ersten und zweiten Zustand des Gassacks erreicht.

Zur zusätzlichen Fixierung der Falte ist es möglich, eine Reissnaht vorzusehen. Diese Reissnaht nimmt beim Entfalten des Gassacks einen Teil der Zugkraft auf, die der Gassack auf das Haltemittel ausübt.

Vorteilhaft umfasst das Haltemittel eine Feder. Diese drückt im ersten Zustand des Gassacks auf die Falte(n) und erleichtert so, je nach konkreter Ausgestaltung, ein Lösen des Haltemittels aus dem Gassack oder ein Abziehen der Falte(n) vom Haltemittel.

Die Feder ist vorzugsweise längs einer Hülse geführt, die zur Lagestabilisierung der Feder dient. Im Fall eines einen pyrotechnischen Antrieb aufweisenden Haltemittels wird ein weiterer Vorteil dadurch erreicht, dass die Hülse um den Antrieb herum angeordnet wird, wodurch dieser gleichsam gekapselt ist. So wird beim Auslösen des pyrotechnischen Treibsatzes eine eventuelle Beeinträchtigung des Gassackgewebes vermieden.

Gemäss der Erfindung weist das Haltemittel ein Befestigungsband auf, das die Falte im ersten Zustand des Gassacks hält. Dieses Befestigungsband wird bei Bedarf gelöst, um den Gassack aus dem ersten in den zweiten Zustand zu überführen.

Das Befestigungsband kann im ersten Zustand des Gassacks durch eine Öffnung in der Falte geführt sein. Die Öffnung dient gleichzeitig im zweiten Zustand des Gassacks als Abströmöffnung.

Um eine Festlegung der Falte zu erzielen, wird ein Ende des Befestigungsbandes mit der Gassackwandung verbunden. Alternativ ist es denkbar, ein Ende des Befestigungsbandes an einem starren Lagerteil zu befestigen. Bei dem starren Lagerteil handelt es sich z. B. um den Generatorträger oder ein Gassackhalteblech. In beiden Fällen ist das jeweils andere Ende des Befestigungsbandes lösbar mit dem Lagerteil verbunden, beispielsweise über einen Sprengbolzen. Dabei verhindert die begrenzte Länge des Befestigungsbandes zunächst eine Freigabe der Falte(n). Wird der Sprengbolzen aktiviert, so wird ein Ende des Befestigungsbandes freigegeben, wodurch sich der Gassack weiter ausbreiten kann, die Falten gelöst werden und das Befestigungsband durch die Falten hindurchgezogen wird.

Gemäss einer weiteren Ausführungsform der Erfindung ist vorgesehen, dass das Haltemittel ein Antriebsmittel umfasst, welches in einen mehrstufigen Gasgenerator integriert ist. Dadurch kann auf ein separates Antriebsmittel zur Lösung der Falte verzichtet werden.

Insbesondere ist vorgesehen, dass bei Zündung einer bestimmten Stufe des Gasgenerators das Befestigungsband wenigstens abschnittsweise zerstört wird. Es wird also nach dem Auslösen des Gassacks bei Bedarf auf ein Signal hin z.B. die zweite Stufe des mehrstufigen Gasgenerators gezündet, wobei ein Teil des entstehenden heissen Gases auf das Befestigungsband geleitet wird. Das Band wird dadurch zumindest teilweise geschmolzen bzw. verbrannt und gibt so die Falte(n) im Gassack frei.

Gemäss einer erfindungsgemäßen Ausführungsform ist das Befestigungsband an zwei Enden mit der Gassackwandung verbunden, wobei die Verbindungsstellen räumlich voneinander getrennt sind. Auf diese Weise erfolgt beim Auslösen des Gassackmoduls, wenn das Befestigungsband straffgezogen wird, die Krafteinleitung in die Gassackwandung an zwei unterschiedlichen Stellen, wodurch eine geringere Belastung des die Wandung bildenden Gewebes erreicht wird. Zudem wird eine gewisse Elastizität der Anordnung erzielt, da die beiden Verbindungsstellen sich durch den beim Entfalten des Gassacks auf das Befestigungsband ausgeübten Zug aufeinander zu und voneinander weg bewegen, also gleichsam federn können.

Insbesondere verläuft das Befestigungsband bei aufgeblasenem Gassack V-förmig. Günstige Kräfteverhältnisse ergeben sich, wenn die beiden Schenkel des V etwa einen 90[deg.]-Winkel miteinander einschliessen.

Das Haltemittel kann eine Schnur aufweisen, die an einem starren Lagerteil lösbar befestigt ist. Soll der Gassack vom ersten in den zweiten Zustand überführt werden, wird die Schnur von dem starren Lagerteil gelöst und gibt auf diese Weise die Falte(n) frei. Eine Schnur bietet den Vorteil, dass sie sich auch durch eine kleine Öffnung in der Falte der Gassackwandung ziehen lässt, um die Falte freizugeben, und dass ein geringeres Packvolumen vorhanden ist.

Vorzugsweise bildet die Schnur eine Schlaufe, durch die das Befestigungsband geführt ist. Bei dieser Ausgestaltung ist wenigstens ein Ende des Befestigungsbandes mit der Gassackwandung verbunden, während ein zweites Ende an der Schnur festgelegt ist, die wiederum durch die Falte(n) geführt und beispielsweise an einem starren Lagerteil lösbar befestigt ist. Besonders vorteilhaft jedoch wird eine solche Schnur mit einem V-förmig verlaufenden Befestigungsband kombiniert, das an zwei Enden mit der Gassackwandung verbunden ist. Die untere Spitze des V ist durch die Schlaufe in der Schnur geführt, die wiederum durch die Falten in der Gassackwandung "gefädelt" und lösbar an einem starren Lagerteil festgelegt wird.

Die Schlaufe lässt sich z.B. dadurch lösbar festlegen, dass sie im ersten Zustand des Gassacks um ein an einem starren Lagerteil befestigtes Antriebsmittel geführt ist.

Vorteilhaft weist dann das Haltemittel eine Klemmeinrichtung für die Schnur auf, die ein Verrutschen der Schnur längs des Antriebsmittels verhindert. Bei dieser Klemmeinrichtung kann es sich beispielsweise um einen am Antriebsmittel vorgesehenen Vorsprung oder um eine Nut zur Aufnahme der Schnur handeln.

Gemäss einer bevorzugten Ausführungsform ist die Klemmeinrichtung einstückig mit einem Zünder eines Gasgenerators ausgebildet. Der Zünder sollte dann in unmittelbarer Nähe des Antriebsmittels angeordnet sein und beispielsweise einen Vorsprung aufweisen, der für die nötige Klemmung der Schnur im ersten Zustand des Gassacks sorgt.

Insbesondere handelt es sich bei dem Lagerteil um das Gehäuse eines Gasgenerators. An diesem kann die Schnur über das Antriebsmittel, beispielsweise einen Sprengbolzen, festgelegt werden. Die Schnur lässt sich dann auf einfache Weise unmittelbar durch den Zünder des Gasgenerators klemmen.

Die Gassackwandung weist bevorzugt im ersten Zustand des Gassacks mehrere Falten mit je mindestens einer Öffnung pro Gassacklage auf, durch die das Befestigungsband geführt ist. Durch das Vorsehen mehrerer Falten lässt sich eine besonders hohe Volumenvergrösserung beim Übergang vom ersten zum zweiten Zustand des Gassacks erreichen.

Vorzugsweise verdeckt das Befestigungsband im ersten Zustand des Gassacks eine Öffnung in der Falte. Da das Befestigungsband, insbesondere wenn es V-förmig verläuft, eine relativ grosse Breite aufweist, wird so die Öffnung in der Gassackwandung im ersten Zustand des Gassacks sicher verschlossen. Bei dieser Ausführungsform ist besonders vorteilhaft, wenn nicht das Befestigungsband selbst im ersten Zustand des Gassacks lösbar am starren Lagerteil festgelegt wird, sondern eine Schnur zwischengeschaltet wird, die sich beim Lösen des Haltemittels leichter durch die Falte(n) der Gassackwandung ziehen lässt.

Vorzugsweise ändert sich die Tiefe des Gassacks zwischen dem ersten Zustand und dem zweiten Zustand nur um maximal 20%, was beispielsweise durch das Vorsehen von permanenten Haltebändern erreicht werden kann. Dadurch wird ein Zurückprallen des Fahrzeuginsassen durch einen dem Insassen entgegenkommenden Gassack beim Übergang vom ersten in den zweiten Zustand weitgehend verhindert.

Weitere Merkmale und Vorteile der Erfindung ergeben sich aus der nachfolgenden Beschreibung mehrerer bevorzugter Ausführungsformen der Erfindung und weiterer, das Verständnis der Erfindung erleichternder Beispiele anhand der beigefügten Zeichnung. In dieser zeigt:
Figur 1 einen (das Verständnis der Erfindung erleichternden) Teilschnitt durch ein Gassackmodul in einem ersten Zustand des Gassacks;
Figur 2 einen (das Verständnis der Erfindung erleichternden) Schnitt längs der Linie II-II durch das Gassackmodul aus Figur 1;
Figur 3 einen (das Verständnis der Erfindung erleichternden) Schnitt längs der Linie III-III durch das Gassackmodul aus Figur 1, jedoch in einem zweiten Zustand des Gassacks;
Figur 4 einen (das Verständnis der Erfindung erleichternden) Schnitt ähnlich Figur 2 durch ein Gassackmodul im ersten Zustand des Gassacks;
Figur 5 einen (das Verständnis der Erfindung erleichternden) Schnitt entsprechend

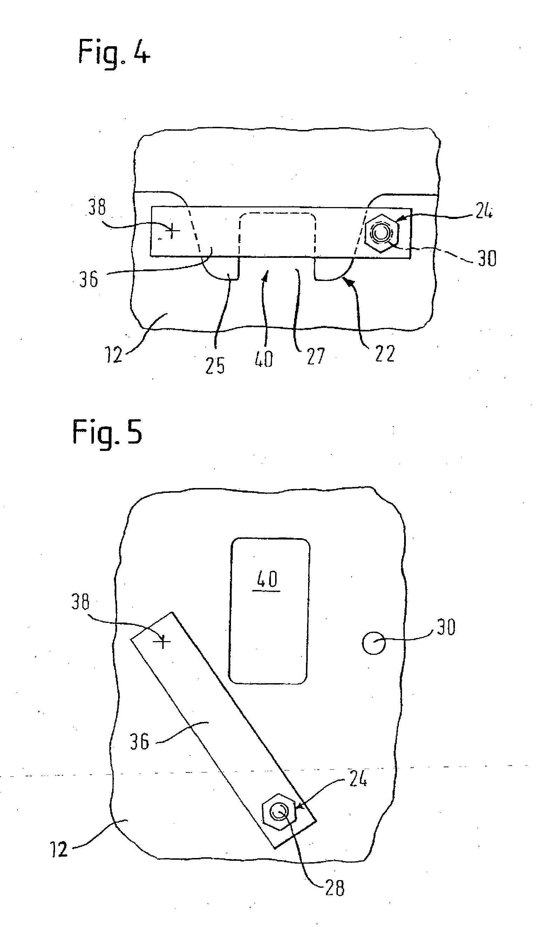

Figur 4, jedoch im zweiten Zustand des Gassacks;

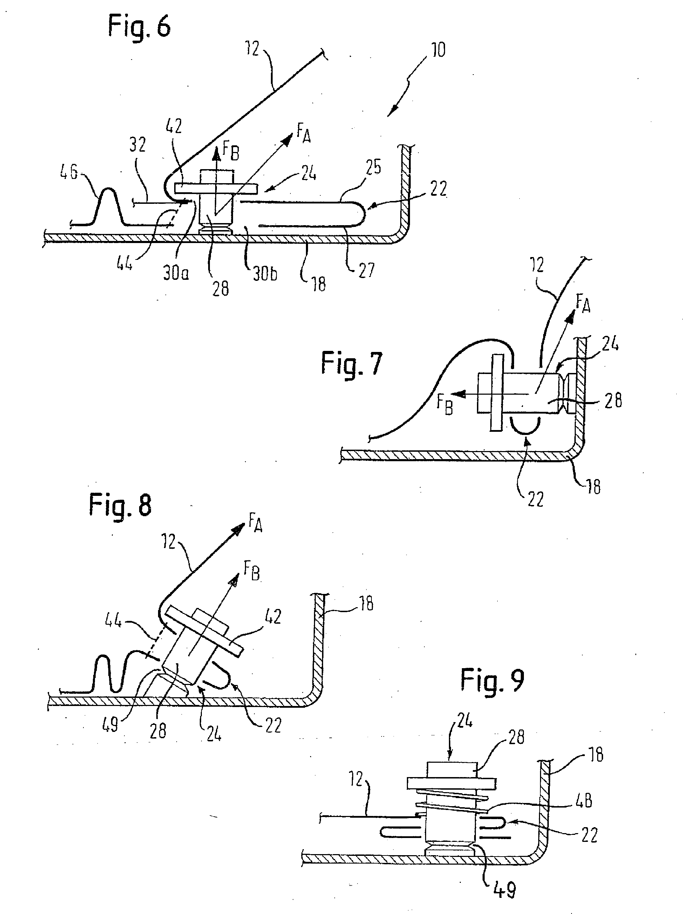

Figur 6 einen (das Verständnis der Erfindung erleichternden) Teilschnitt durch ein Gassackmodul im ersten Zustand des Gassacks;
Figur 7 einen (das Verständnis der Erfindung erleichternden) Schnitt ähnlich Figur 6 durch ein Gassackmodul, ebenfalls im ersten Zustand des Gassacks;
Figur 8 einen (das Verständnis der Erfindung erleichternden) Teilschnitt durch ein Gassackmodul;
Figur 9 einen (das Verständnis der Erfindung erleichternden) Teilschnitt durch ein Gassackmodul;

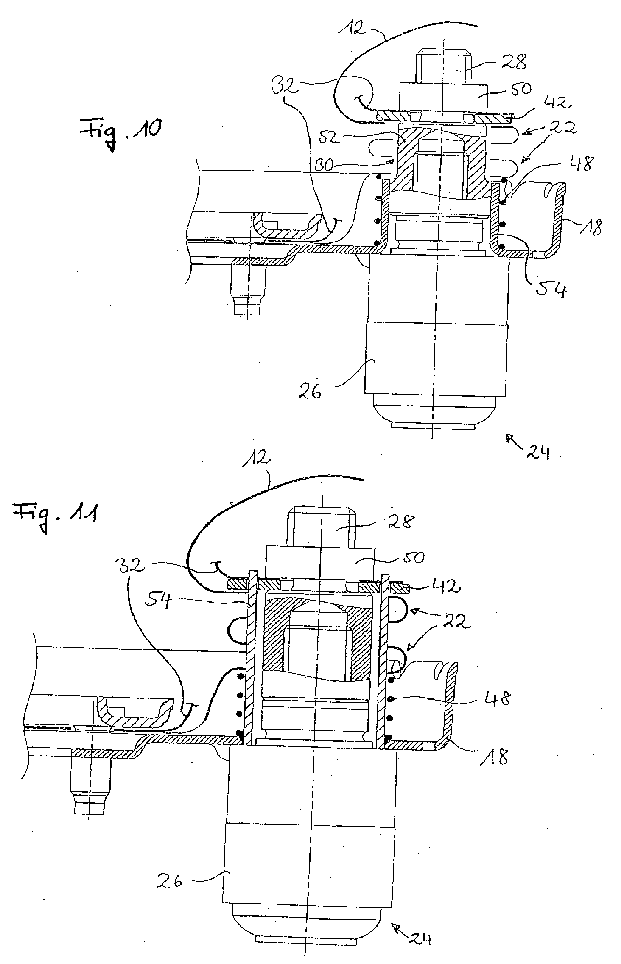

Figur 10 einen (das Verständnis der Erfindung erleichternden) Teilschnitt durch ein Gassackmodul;
Figur 11 einen (das Verständnis der Erfindung erleichternden) Teilschnitt durch ein Gassackmodul;

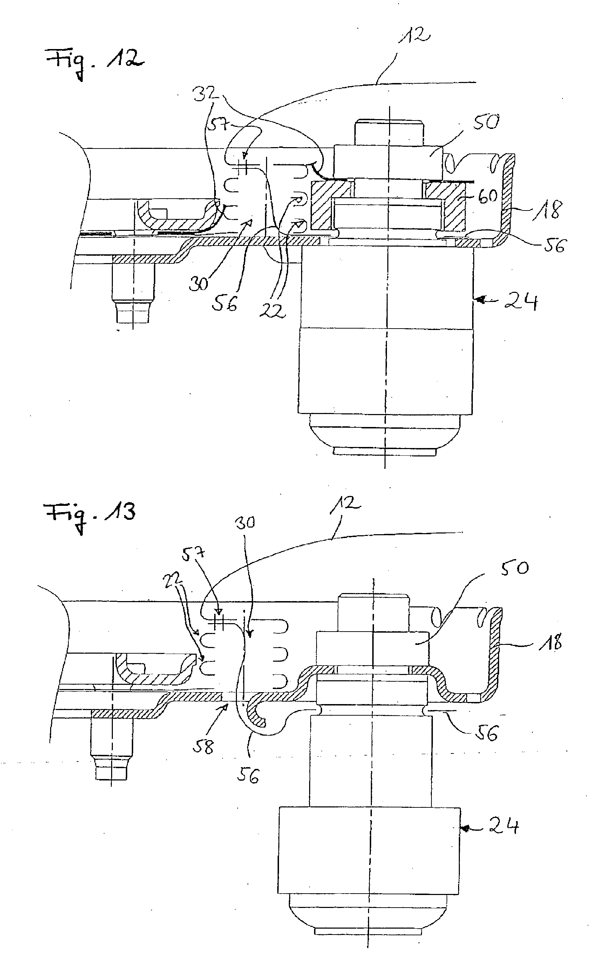

Figur 12 einen (das Verständnis der Erfindung erleichternden) Teilschnitt durch ein Gassackmodul;
Figur 13 einen Teilschnitt durch ein Gassackmodul gemäss einer Ausführungsform der Erfindung;

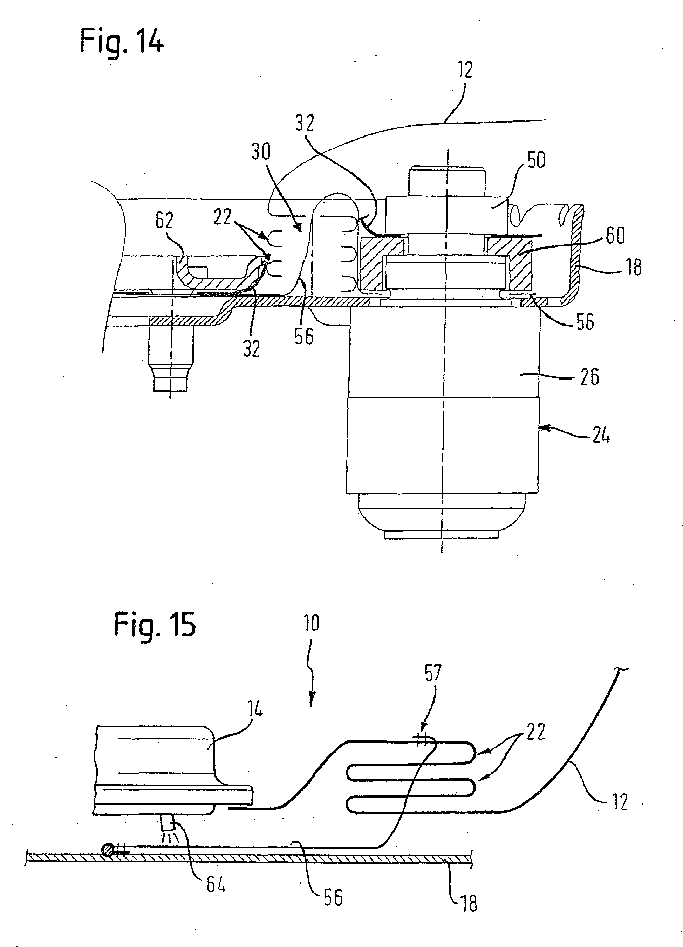

Figur 14 einen (das Verständnis der Erfindung erleichternden) Teilschnitt durch ein Gassackmodul;
Figur 15 einen (das Verständnis der Erfindung erleichternden) Teilschnitt durch ein Gassackmodul;

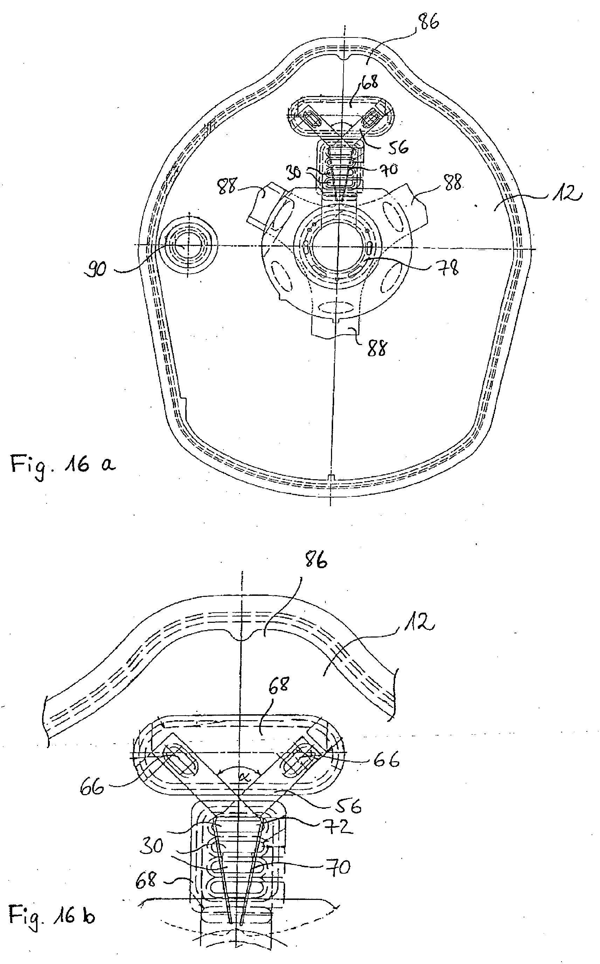

Figur 16 a eine Draufsicht auf die Unterseite eines Gassacks, wie er bei einem Gassackmodul gemäss einer zweiten Ausführungsform der Erfindung zum Einsatz kommt, in einem ausgebreiteten Zustand vor der Montage;
Figur 16b ein vergrössertes Detail aus Figur 16a; und

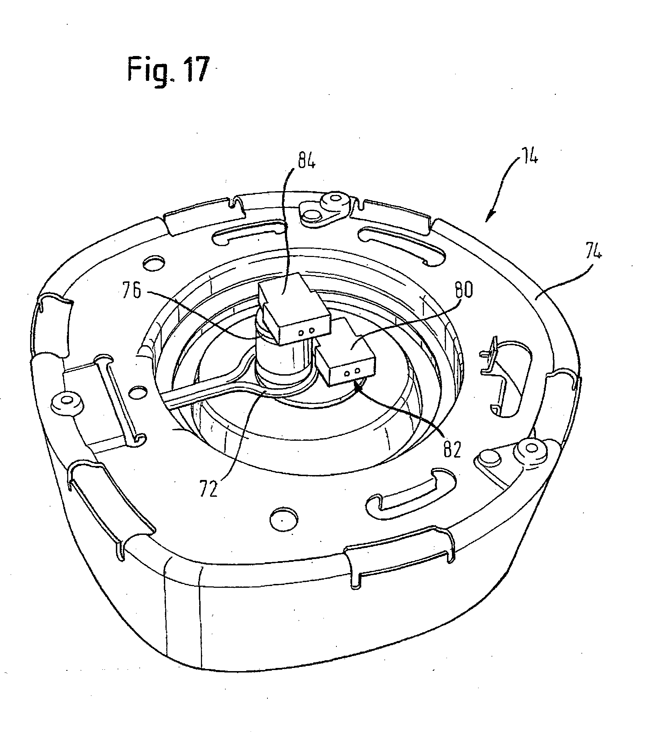

Figur 17 eine Unteransicht eines Gasgenerators, wie er beim Gassackmodul gemäss Figur 16a zum Einsatz kommt.

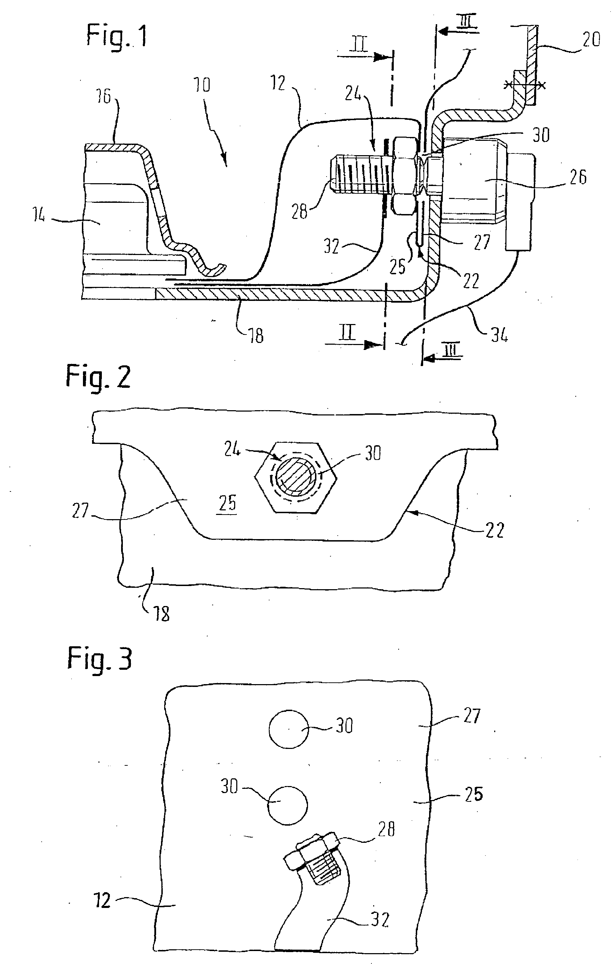

Figur 1 zeigt ausschnittsweise ein Gassackmodul 10 mit einem Gassack 12 und einem Gasgenerator 14, der von einem Käfig 16 umgeben ist. Dabei ist ein Abschnitt des Gassacks 12, der sogenannte Einblasmund, zum Zwecke der Befestigung zwischen dem Käfig 16 und einem Generatorträger 18 geklemmt. In der Figur nur angedeutet ist eine boxförmige Abdeckkappe 20, die mit dem Generatorträger 18 verbunden ist und im nicht ausgelösten Zustand des Gassackmoduls 10 letzteres gegenüber dem Fahrzeuginnenraum abgrenzt.

In dem in den Figuren 1 und 2 gezeigten ersten Zustand des Gassacks 12 weist die Wandung des Gassacks 12 eine Falte 22 auf, die dadurch gebildet ist, dass einander gegenüberliegende Abschnitte 25, 27 der Gassackwandung aneinander anliegen. Die Falte 22 ist über ein Haltemittel in Form eines Sprengbolzens 24 fixiert und zugleich an einem starren Lagerteil, bei dem es sich im gezeigten Beispiel um den Generatorträger 18 handelt, befestigt. Das Haltemittel klemmt die die Falte bildenden Abschnitte 25, 27. Zur Durchführung des Sprengbolzens 24, der aus einem ersten, fest mit dem Generatorträger 18 verbundenen Teil 26 und einem zweiten, bei Aktivierung abgetrennten Teil 28 besteht, sind in beiden die Falte 22 bildenden Abschnitten 25, 27 der Gassackwandung Öffnungen 30 vorgesehen, die einander im ersten Zustand des Gassacks 12 gegenüberliegen.

Ferner ist ein Fangelement in Form eines Fangbandes 32 vorgesehen, das den abtrennbaren Teil 28 des Sprengbolzens 24 mit dem Gassackmodul 10 verbindet, wobei das zweite Ende des Fangbands 32 ebenso wie der Gassack 12 zwischen dem Käfig 16 und dem Generatorträger 18 eingeklemmt ist. Ausserdem weist das Gassackmodul 10 ein Kabel 34 auf, das den Sprengbolzen 24 mit einer nicht gezeigten Steuereinheit verbindet.

Wird nun der Gassack 12 ausgelöst, so befindet er sich zunächst in dem in den Figuren 1 und 2 gezeigten ersten Zustand, in dem die Falte 22 durch den Sprengbolzen 24 am Generatorträger 18 festgelegt ist. Dadurch steht nicht das gesamte mögliche Gassackvolumen zur Verfügung, und der Gassack 12 wird rasch aufgeblasen, zumal auch die im Gassack vorhandenen Öffnungen 30 durch die Falte 22 (sowie den Sprengbolzen 24) zunächst verschlossen sind.

Soll nun der Innendruck im ausgelösten Gassack 12 reduziert werden, wird ein entsprechendes Signal von der Steuereinheit über das Kabel 34 an den Sprengbolzen 24 übermittelt, wodurch dessen pyrotechnisches Antriebsmittel aktiviert wird und den Sprengbolzen 24 in die beiden Teile 26 und 28 teilt. Dadurch wird die Falte 22 und damit auch die Öffnungen 30 freigegeben (siehe Figur 3). Der bei der Aktivierung separierende Teil 28 des Sprengbolzens 24 wird durch das Fangband 32, an dessen Stelle natürlich auch ein Draht verwendet werden kann, am Gassackmodul 10 gehalten, um das Umherfliegen loser Teile zu verhindern.

Bei der Einnahme dieses zweiten Zustands reduziert sich der Innendruck im Gassack 12 im Vergleich zum ersten Zustand, da zum einen das Gassackvolumen um den Bereich der Falte 22 vergrössert wird, und zum anderen die Öffnungen 30 freigegeben werden, die gleichzeitig als Abströmöffnungen dienen. Dabei ist je nach Grösse, Ausbildung und Anzahl der vorgesehenen Falten 22 sowie der Grösse der Öffnungen 30 der Effekt der Volumenvergrösserung oder der Effekt der Gasabströmung dominant. Selbstverständlich ist es auch möglich, keine Abströmöffnungen im Bereich der Falte 22 vorzusehen, wodurch das Gassackmodul 10 auf den Effekt der Volumenvergrösserung reduziert wird.

Die Figuren 4 und 5 zeigen ein weiteres (das Verständnis der Erfindung erleichterndes) Gassackmodul, bei dem das Haltemittel neben einem Sprengbolzen 24 zusätzlich über einen Klemmbügel 36 verfügt. Dieser Klemmbügel 36 ist auf einer Seite über eine Befestigungsschraube 38, auf der anderen Seite über den Sprengbolzen 24 mit dem Generatorträger verbunden und klemmt wiederum eine Falte 22 in der Wandung des Gassacks 12. Neben einer kleinen Öffnung 30 zur Durchführung des Sprengbolzens 24 ist eine weitere, rechteckig ausgebildete Abströmöffnung 40 im Bereich der Falte 22 vorgesehen. Es ist zu beachten, dass bei diesem Beispiel der Gassack 12 vom Einblasmund beginnend unmittelbar am Generatorträger entlang geführt ist und die Falte 22 sowie der Klemmbügel 36 somit im Inneren des Gassacks 12 angeordnet sind.

Im ersten Zustand des Gassacks 12 wird die Falte 22 durch den Klemmbügel 36 sowie den Sprengbolzen 24 fixiert, wodurch die Abströmöffnung 40 verschlossen ist. Nach der Aktivierung des Sprengbolzens 24 schwenkt der Klemmbügel 36 um die Befestigungsschraube 38 nach unten und gibt die Falte 22 und damit auch die Abströmöffnung 40 frei.

Natürlich ist es wiederum möglich, auf die Abströmöffnung 40 zu verzichten und zur Reduzierung des Gassackinnendrucks lediglich die durch Lösen des Haltemittels und Entfalten der Falte 22 bewirkte Volumenvergrösserung des Gassacks 12 zu nutzen. Weitere Varianten bestehen darin, mehrere Falten oder mehrere Öffnungen innerhalb einer Falte vorzusehen. Auch kann die Form der entstehenden Öffnung rund oder andersartig sein.

Darüber hinaus kann die Anordnung des Sprengbolzens 24 und des Haltemittels in Bezug zum Gassackmodul 10 auf vielfältige Weise variiert werden. So kann der Klemmbügel 36 (und damit die Falte 22) auch vertikal angeordnet sein, ebenso ist eine Befestigung am Modulboden möglich. Auch die Abdeckkappe 20 kann zur Anbringung des Haltemittels verwendet werden. Ferner ist es möglich, die Gassackfalte statt auf der Innen- auf der Aussenseite des Moduls festzulegen, wobei dann das Haltemittel am aussenliegenden Wandungsabschnitt des Gassacks unmittelbar angreift.

Die Figuren 6 bis 8 zeigen verschiedene Möglichkeiten, den Sprengbolzen 24 am Generatorträger 18 anzubringen. Je nach Anordnung des Sprengbolzens 24 erhält man eine andere durch den sich entfaltenden Gassack 12 auf den Sprengbolzen 24 ausgeübte Zugkraft FA (in den Figuren durch einen Pfeil symbolisiert). Wie zu erkennen ist, schliesst die Richtung der Kraft FA bei diesem Beispiel gemäss Figur 7, bei der der Sprengbolzen, wie auch in Figur 1, an einer Seitenwand des Generatorträgers 18 angeordnet ist, einen Winkel von etwa 115[deg.] mit der Richtung einer Kraft FB ein, die die Auszugskraft des Sprengbolzens 24 bzw. dessen zweiten Teils 28 darstellt.

Figur 6 zeigt ein Beispiel eines Gassackmoduls 10, bei der der Sprengbolzen 24 am Boden des Generatorträgers 18 angeordnet ist. Durch diese Art der Anordnung schliessen die durch den sich entfaltenden Gassack 12 ausgeübte Zugkraft FA und die zum Lösen des Bolzens benötigte Auszugskraft FB einen spitzen Winkel von etwa 45[deg.] ein. Zur Optimierung der durch den Gassack 12 auf den Sprengbolzen 24 ausgeübten Zugkräfte ist an dem in der

Figur oberen Ende des Sprengbolzens 24 eine Beilagscheibe 42 angeordnet. Durch Variation der Grösse der Beilagscheibe 42 lässt sich insbesondere der Angriffspunkt der Kraft FA verändern. Zusätzlich ist zwischen den Wandungsabschnitten 25 und 27 eine Reissnaht 44 vorgesehen, die die Falte 22 zunächst zusammenhält. Diese Reissnaht 44 dient ebenfalls zur Zugkraftoptimierung, indem sie den durch den sich entfaltenden Gassack 12 erzeugten Zug wenigstens teilweise aufnimmt. Dadurch lassen sich die Zugkräfte auf den Sprengbolzen 24 minimieren.

Weitere Faktoren zur Optimierung der Gassackinnendruck-Reduzierung durch Lösen des Sprengbolzens 24 sind neben der Anordnung des Sprengbolzens 24, der Grösse der Beilagscheibe 42 und dem Vorsehen einer Reissnaht 44 auch die Anzahl der Falten 22 (mit der Anzahl der Falten ändert sich der Volumenunterschied zwischen dem ersten und dem zweiten Zustand des Gassacks) sowie die Grösse der Öffnungen 30 bzw. der Abströmöffnung 40. Bei dem Beispiel gemäss Figur 6 hat die in der Figur oben liegende Öffnung 30a einen kleineren Durchmesser als die untere Öffnung 30b. Natürlich ist der umgekehrte Fall ebenso möglich. Ausserdem ist zwischen der Klemmung des Gassacks 12 am Käfig 16 und der Stelle seiner Festlegung am Generatorträger 18 durch den Sprengbolzen 24 eine Gassacklose 46 vorgesehen.

In einem weiteren Beispiel (Figur 8) ist der Sprengbolzen 24 derart schräg am Generatorträger 18 befestigt, dass die Richtung der auf den Sprengbolzen 24 ausgeübten Auszugskraft FB mit der Richtung der Gassackzugkraft FA im Wesentlichen zusammenfällt. Auf diese Weise wird durch den sich entfaltenden Gassack 12 gleichzeitig ein Zug auf den Sprengbolzen 24 ausgeübt, der dessen Öffnung unterstützt.

Wie in Figur 9 gezeigt ist, kann das Haltemittel eine Feder 48 aufweisen, die um den Sprengbolzen 24 herum angeordnet ist. Die Feder 48 stützt sich am oberen Teil 28 des Sprengbolzens 24 bzw. an einer Beilagscheibe ab und drückt die Falte 22 in der Figur 9 nach unten, in Richtung zum Generatorträger 18 hin. Dadurch ermöglicht es die Feder 48, dass der oberhalb einer Sollbruchlinie 49 liegende Teil 28 beim Aktivieren des Sprengbolzens 24 weitgehend vom Gassack 12 ungehindert abgetrennt werden und den Faltenbereich verlassen kann.

In Figur 10 ist ein weiteres Beispiel eines Gassackmoduls 10 im ersten Zustand des Gassacks dargestellt, bei der, wie bereits erwähnt, mehrere Falten 22 in der Gassackwandung vorgesehen sind. Wiederum erstreckt sich der aus einem ersten Teil 26 und einem zweiten Teil 28 bestehende Sprengbolzen 24 durch die Öffnungen 30 in den die Falten 22 bildenden Gassackabschnitten hindurch und legt somit die Falten 22 relativ zum Generatorträger 18 fest. Die Beilagscheibe 42 wird am oberen Ende des Sprengbolzens 24 durch eine Mutter 50 gehalten, wobei das Fangband 32 für den abtrennbaren Teil 28 zwischen der Mutter 50 und der Beilagscheibe 42 geklemmt ist. In seinem weiteren Verlauf ist das Fangband 32 durch die Gassackwandung hindurchgeführt. Um den Sprengbolzen 24, genauer gesagt um einen Aufsatz 52 herum, der den oberen Abschnitt des feststehenden Teils 26 bildet, ist eine mit dem Generatorträger 18 verbundene Hülse 54 vorgesehen. Insbesondere wird die Hülse 54 durch Umformen des Generatorträgers 18 gebildet. Die Hülse 54 dient der Führung der Feder 48, um ein Durchbiegen derselben zu verhindern. Ausserdem ist durch die Hülse 54 der den pyrotechnischen Treibsatz enthaltende Teil des Sprengbolzens 24 zum Inneren des Gassackmoduls 10 hin abgeschirmt, wodurch eine Beeinträchtigung des Gassacks 12 bei der Auslösung des Sprengbolzens 24 verhindert wird.

Im Unterschied zum Beispiel gemäss Figur 9 ist hier die Feder 48 zwischen dem Generatorträger 18 und den Falten 22 angeordnet, drückt also die Falten 22 nach oben gegen die Beilagscheibe 42. Dies ist sinnvoll, da neben dem Teil 26 auch der gesamte Aufsatz 52 (bis unmittelbar unterhalb der Beilagscheibe 42) bei der Aktivierung des Sprengbolzens 24 fest mit dem Generatorträger 18 verbunden bleibt. Die Feder 48 erleichtert nun also das "Abstreifen" der Falten 22 von dem feststehenden Aufsatz 52.

Gleiches gilt für das in Figur 11 gezeigte Beispiel, das dem der Figur 10 sehr ähnlich ist. Die Hülse 54 ist jedoch als separates Bauteil ausgeführt und erstreckt sich weiter ins Innere des Gassackmoduls. Dabei ist auch die Hülse 54 durch die Öffnungen 30 in den Falten 22 der Gassackwandung geführt. Nach oben wird die Hülse 54 durch die Beilagscheibe 42 sowie die Mutter 50 verschlossen, wodurch besonders wirkungsvoll eine Beeinträchtigung des Gassackgewebes bei der Aktivierung des Sprengbolzens 24 verhindert wird. Der Sprengbolzen 24 ist also gleichsam durch die Hülse 54 und die Beilagscheibe 42 gekapselt.

Das in Figur 12 gezeigte Beispiel und die in Figur 13 gezeigte Ausführungsforme unterscheiden sich von den bisher beschriebenen hauptsächlich dadurch, dass die Falten 22 des Gassacks 12 nicht direkt durch den Sprengbolzen 24 festgelegt werden, indem dieser durch die Öffnungen 30 in den Falten 22 hindurchgeführt wird. Stattdessen ist durch die Öffnungen 30 ein Befestigungsband 56 geführt, dessen erstes Ende mit der Gassackwandung verbunden, insbesondere vernäht ist (Bezugszeichen 57). Das andere Ende des Befestigungsbands 56 wird durch den Sprengbolzen 24 am Generatorträger 18 festgelegt, entweder auf der Innenseite, wie in Figur 12 gezeigt, oder aber auf der Aussenseite des Generatorträgers 18 (Figur 13). Im letzteren Fall ist das Befestigungsband 56 durch eine Öffnung 58 im Generatorträger 18 nach aussen geführt.Gemäss Figur 12 ist zwischen der Mutter 50 und dem Generatorträger 18 ein Distanzstück 60 vorgesehen, durch das das Befestigungsband 56 geklemmt wird.

Wird nun in einem Rückhaltefall der Gassack 12 entfaltet, so sind die Falten 22 durch die begrenzte Länge des Befestigungsbands 56 daran gehindert, sich zu entfalten und so die Öffnungen 30 freizugeben. Bei der Aktivierung des Sprengbolzens 24 wird dieser (bei beiden Ausführungen) auf Höhe des Befestigungsbandes 56 geteilt. Dabei wird einmal der obere Teil (Figur 12), einmal der untere Teil (Figur 13) des Sprengbolzens 24 abgetrennt. Bedingt durch den Gassackinnendruck straffen sich die Falten 22, wobei das jetzt lose zweite Ende des Befestigungsbands 56 durch die Öffnungen 30 gezogen wird.

Figur 14 zeigt ein weiteres Beispiel eines Gasackmoduls, wobei bei dieser im Unterschied zu der der Figur 12 das erste Ende des Befestigungsbandes 56 an einem starren Lagerteil befestigt, insbesondere in ein Gassackhalteblech 62 eingehängt ist. Das Befestigungsband 56 ist dann wie gehabt durch die Öffnungen 30 in den Falten 22 geführt und mittels des Sprengbolzens am Generatorträger 18 festgelegt.

Figur 15 schliesslich zeigt ein Beispiel eines Gassackmoduls 10, bei der ebenfalls die Falten 22 in der Gassackwandung durch das mit dem Gassack 12 vernähte Befestigungsband 56 am Generatorträger 18 festgelegt werden. Im Unterschied zur Figur 12 ist das Befestigungsband 56 jedoch zur Mitte des Gassackmoduls 10, genauer in den Bereich des Gasgenerators 14, geführt und verläuft dort zwischen diesem und dem Generatorträger 18. Der Gasgenerator 14 ist bei dieser Ausführungsform mehrstufig, insbesondere zweistufig ausgebildet. Um das Befestigungsband 56 im Rückhaltefall gezielt freizugeben, ist ein Bypass im Gasgenerator 14 ausgebildet, der bei der Zündung der zweiten Stufe einen Massenstrom von heissem Gas erzeugt, der zumindest teilweise über eine Führungseinrichtung 64 auf das Befestigungsband 56 gelenkt wird. Dadurch wird das Befestigungsband 56 aufgebrannt bzw. aufgeschmolzen, also wenigstens abschnittsweise zerstört und gibt so die Falten 22 frei. Dabei erfolgt die Zündung der zweiten Generatorstufe aktiv auf ein Signal hin. Bei dieser Beispiel ist also das Antriebsmittel zur Freigabe des Befestigungsbands 56 in den Gasgenerator 14 integriert, weshalb auf eine separate Antriebsvorrichtung wie beispielsweise einen Sprengbolzen verzichtet werden kann.

Figur 16a zeigt eine Draufsicht auf die dem Fahrzeuginsassen abgewandte Unterseite eines Gassacks 12, wie er bei einer letzten Ausführungsform des erfindungsgemässen Gassackmoduls eingesetzt wird. Der Gassack 12 ist in einem ausgebreiteten Zustand vor dem Einbau in das Gassackmodul gezeigt. Auch bei dieser Ausführungsform ist ein Befestigungsband 56 vorgesehen, das jedoch im Unterschied zu den bisherigen Ausführungsformen an zwei Enden mit der Gassackwandung verbunden ist. Das Befestigungsband 56 verläuft in dem in der Figur gezeigten ausgebreiteten Zustand (ebenso wie bei aufgeblasenem Gassack 12) V-förmig, wobei die beiden Schenkel des V einen Winkel [alpha] von etwa 90[deg.] einschliessen (siehe Figur 16b).Die Verbindungsstellen 66 des Befestigungsbands 56 mit der Gassackwandung sind räumlich voneinander getrennt, und die Gassackwandung ist im Bereich der Verbindungsstellen 66 mit einer aussen auf die Wandung aufgenähten Verstärkungslage 68 versehen.

Das V-förmig gefaltete Befestigungsband 56 ist in seinem unteren losen, nicht mit der Gassackwandung verbundenen Bereich durch eine von einer Schnur 70 gebildete Schlaufe 72 geführt. Bei der Montage des Gassackmoduls wird die Schnur durch die Öffnungen 30 in der Gassackwandung (die im Bereich der Öffnungen 30 ebenfalls eine Verstärkungslage 68 aufweist) gefädelt. Durch starkes Anziehen der Schnur 70 wird die Gassackwandung im Bereich der Öffnungen 30 in Falten (Zick-Zack-Faltung) gelegt, ähnlich der Ausführungsform gemäss Figur 12. Durch das Anziehen der Schnur 70 wird das Befestigungsband 56 so weit in die nach der Faltung im Wesentlichen übereinanderliegenden Öffnungen 30 hineingezogen, dass das Befestigungsband 56 durch die Öffnungen 30 in den Falten geführt ist und diese somit weitgehend gasdicht abdeckt. Die Schnur 70, die ebenso wie das Befestigungsband 56 einen Teil des Haltemittels bildet, wird anschliessend an einem starren Lagerteil des Gassackmoduls, hier dem Gehäuse 74 des Gasgenerators 14, lösbar festgelegt (Figur 17).

Dies wird dadurch erreicht, dass die Schlaufe 72 um ein Antriebsmittel 76 in Form eines Sprengbolzens geführt wird, das am Gehäuse 74 des Gasgenerators 14 befestigt ist. Der in Figur 16a nicht gezeigte Gasgenerator 14 ist im montierten Zustand des Gassackmoduls im Bereich eines Einblasmundes 78 im Inneren des Gassacks 12 angeordnet.

Um zu verhindern, dass die Schlaufe 72 längs des Antriebsmittels 76 verrutscht und dadurch bei der Betätigung des Antriebsmittels 76, hier bei der Zündung des Sprengbolzens, die Freigabe der Schlaufe 72 und somit der Falten in der Gassackwandung behindert wird, umfasst das Haltemittel ausserdem eine Klemmeinrichtung 80 für die Schnur 70. Im gezeigten Beispiel ist die Klemmeinrichtung 80 einstückig mit einem Zünder 82 des Gasgenerators 14 ausgebildet, der, wie aus Figur 17 zu erkennen ist, unmittelbar benachbart zum Antriebsmittel 76 angeordnet ist. Als Klemmeinrichtung 80 wird insbesondere ein Zündpillenstecker des Zünders 82 verwendet, der ebenso wie der Zündpillenstecker 84 des Antriebsmittels 76 nach dem Einhängen der Schlaufe 72 aufgesteckt wird. Der Zündpillenstecker des Zünders 82 sorgt für einen Formschluss mit dem Antriebsmittel 76.

Bei der in Figur 17 gezeigten Ausführung liegen Abschnitte der Schnur 70 zum Rand des Gasgenerators 14 hin aneinander an, was nicht zwingend der Fall sein muss.

Wie weiterhin aus Figur 16a zu erkennen ist, weist der Gassack 12 im Zuschnitt eine Ausbuchtung 86 auf, die gewährleistet, dass im ersten Zustand des Gassacks, also im montierten Zustand mit festgelegten Falten, die obere Hälfte des Gassacks 12 in etwa Halbkreisform hat. Die Ausbuchtung 86 ist zu diesem Zweck radial ausserhalb des die Falten bildenden Abschnitts der Gassackwandung angeordnet, also in Verlängerung der Verbindungslinie zwischen den Öffnungen 30 und dem Einblasmund 78.

Ferner verfügt der Gassack 12 über mehrere in seinem Inneren angeordnete Haltebänder 88, die in der Darstellung der Figur 16a "sichtbar" gemacht wurden. Die Haltebänder 88 sind sowohl mit der unteren, in der Figur 16 dargestellten Gassacklage im Bereich des Einblasmunds 78 wie auch mit der in der Figur nicht gezeigten oberen Gassacklage permanent verbunden, z.B. vernäht. Diese Haltebänder 88 begrenzen die Tiefe des sich entfaltenden Gassacks, die sich folglich auch beim Übergang vom ersten Zustand mit festgelegten Falten zum zweiten Zustand mit freigegebenen Falten kaum, insbesondere um höchstens 20%, verändert. Die Volumenvergrösserung des Gassacks 12 erfolgt also in erster Linie in seitlicher bzw. radialer Richtung.

Um ausserdem unabhängig von der Aktivierung des Antriebsmittels 76 ein rasches Entleeren des Gassacks 12 nach erfolgter Rückhaltung zu ermöglichen, ist zusätzlich zu den Öffnungen 30 eine permanent offene Abströmöffnung 90 in der Wandung des Gassacks 12 vorgesehen.

## Patentansprüche

1. Gassackmodul mit
einem Gassack (12), dessen Wandung in einem ersten Zustand des Gassacks (12) wenigstens eine Falte (22) aufweist, und mit
einem Haltemittel, das die Falte (22) fixiert,
wobei das Haltemittel auf ein Signal hin aktiv lösbar ist, wodurch der Gassack (12) einen zweiten Zustand einnimmt, in dem die Falte (22) geöffnet ist,
wobei das Haltemittel ein Befestigungsband (56) aufweist, das die Falte (22) im ersten Zustand des Gassacks (12) hält,
**dadurch gekennzeichnet, dass** ein Ende des Befestigungsbands (56) durch einen Sprengbolzen (24) auf einer Außenseite des Gassackmoduls festgelegt ist, und ein anderes Ende des Befestigungsbands (56) mit der Wandung des Gassackes (12) verbunden ist.

2. Gassackmodul mit
einem Gassack (12), dessen Wandung in einem ersten Zustand des Gassacks (12) wenigstens eine Falte (22) aufweist, und mit
einem Haltemittel, das die Falte (22) fixiert,
wobei das Haltemittel auf ein Signal hin aktiv lösbar ist, wodurch der Gassack (12) einen zweiten Zustand einnimmt, in dem die Falte (22) geöffnet ist,
wobei das Haltemittel ein Befestigungsband (56) aufweist, das die Falte (22) im ersten Zustand des Gassacks (12) hält,
**dadurch gekennzeichnet, dass** das Befestigungsband (56) an zwei Enden mit der Wandung des Gassackes (12) verbunden ist, wobei die Verbindungsstellen (66) räumlich voneinander getrennt sind.

3. Gassackmodul nach Anspruch 1 oder 2, **dadurch gekennzeichnet, dass** das Haltemittel ein Antriebsmittel umfasst, welches in einen mehrstufigen Gasgenerator (14) integriert ist.

4. Gassackmodul nach Anspruch 3, **dadurch gekennzeichnet, dass** bei Zündung einer bestimmten Stufe des Gasgenerators (14) das Befestigungsband (56) wenigstens abschnittsweise zerstört wird.

5. Gassackmodul nach Anspruch 1 oder nach Anspruch 1 mit einem der vorhergehenden Ansprüche 3 oder 4, **dadurch gekennzeichnet, dass** der Sprengbolzen (24) aus einem ersten, fest mit einem starren Lagerteil verbundenen Teil (26) und einem zweiten, bei Aktivierung des Sprengbolzens (24) abgetrennten Teil (28) besteht, wobei der bei Aktivierung des Sprengbolzens (24) abgetrennte Teil (28) außerhalb des Gassackmoduls angeordnet ist.

6. Gassackmodul nach Anspruch 2 oder nach Anspruch 2 und einem der vorhergehenden Ansprüche 3 oder 4, **dadurch gekennzeichnet, dass** das Befestigungsband (56) bei aufgeblasenem Gassack (12) V-förmig verläuft.

7. Gassackmodul nach einem der vorhergehenden Ansprüche, **dadurch gekennzeichnet, dass** die Falte dadurch gebildet ist, dass gegenüberliegende Abschnitte der Wandung aneinander anliegen, dass das Haltemittel die gegenüberliegenden Abschnitte aneinander hält.

8. Gassackmodul nach einem der vorhergehenden Ansprüche 2, 3, 4 bis 7, **dadurch gekennzeichnet, dass** das Haltemittel einen Sprengbolzen (24) aufweist und, dass der Sprengbolzen (24) aus einem ersten, fest mit einem starren Lagerteil verbundenen Teil (26) und einem zweiten, bei Aktivierung des Sprengbolzens (24) abgetrennten Teil (28) besteht, wobei der bei Aktivierung des Sprengbolzens (24) abgetrennte Teil (28) außerhalb des Gassackmoduls angeordnet ist.

9. Gassackmodul nach einem der vorhergehenden Ansprüche, **dadurch gekennzeichnet, dass** das Haltemittel eine Schnur (70) aufweist, die an einem starren Lagerteil lösbar befestigt ist.

10. Gassackmodul nach Anspruch 9, **dadurch gekennzeichnet, dass** die Schnur (70) eine Schlaufe (72) bildet, durch die das Befestigungsband (56) geführt ist.

11. Gassackmodul nach Anspruch 10, **dadurch gekennzeichnet, dass** die Schlaufe (72) um ein an einem starren Lagerteil befestigtes Antriebsmittel (76) geführt ist.

12. Gassackmodul nach Anspruch 11, **dadurch gekennzeichnet, dass** das Haltemittel eine Klemmeinrichtung (80) für die Schnur (70) aufweist, die ein Verrutschen der Schnur (70) längs des Antriebsmittels (76) verhindert.

13. Gassackmodul nach einem der Ansprüche 9 bis 12, **dadurch gekennzeichnet, dass** die Gassackwandung im ersten Zustand des Gassacks (12) mehrere Falten (22) mit je mindestens einer Öffnung (30) pro Gassacklage aufweist, durch die die Schnur (70) geführt ist.

14. Gassackmodul nach Anspruch 12 oder13, **dadurch gekennzeichnet, dass** die Klemmeinrichtung (80) einstückig mit einem Zünder (82) eines Gasgenerators (14) ausgebildet ist.

15. Gassackmodul nach einem der Ansprüche 9 bis 14, **dadurch gekennzeichnet, dass** das Lagerteil das Gehäuse (74) eines Gasgenerators (14) oder ein Gasgeneratorträger des Gassackmoduls ist.

16. Gassackmodul nach einem der vorhergehenden Ansprüche 2 bis 15, **dadurch gekennzeichnet, dass** das Haltemittel ein Antriebsmittel, vorzugsweise ein pyrotechnisches Antriebsmittel, insbesondere einen Sprengbolzen (24) aufweist.

17. Gassackmodul nach einem der vorhergehenden Ansprüche, **dadurch gekennzeichnet, dass** im zweiten Zustand ein geringerer Innendruck im entfalteten Gassack (12) herrscht als im ersten Zustand und/oder im zweiten Zustand ein größeres Volumen aufweist als im ersten Zustand.

## Claims

1. An airbag module comprising
an airbag (12) the wall of which in a first state of the airbag (12) includes at least one fold (22), and comprising
a holding means for fixing the fold (22),
wherein the holding means is actively detachable in response to a signal, thereby the airbag (12) adopting a second state in which the fold (22) is opened,
wherein the holding means includes a mounting strap (56) for retaining the fold (22) in the first state of the airbag (12),
**characterized in that** one end of the mounting strap (56) is fixed by an explosive stud (24) at an outside of the airbag module and another end of the mounting strap (56) is connected to the wall of the airbag (12).

2. An airbag module comprising
an airbag (12) the wall of which includes in a first state of the airbag (12) at least one fold (22), and comprising
a holding means for fixing the fold (22),
wherein the holding means is actively detachable in response to a signal, thereby the airbag (12) adopting a second state in which the fold (22) is opened,
wherein the holding means includes a mounting strap (56) for retaining the fold (22) in the first state of the airbag (12),
**characterized in that** the mounting strap (56) is connected to the wall of the airbag (12) at two ends, wherein the connecting points (66) are spatially separated from each other.

3. The airbag module according to claim 1 or 2, **characterized in that** the holding means comprises a drive means integrated in a multi-stage inflator (14).

4. The airbag module according to claim 3, **characterized in that** upon igniting a particular stage of the inflator (14) the mounting strap (56) is destroyed at least in portions.

5. The airbag module according to claim 1 or according to claim 1 in connection with any one of the preceding claims 3 or 4, **characterized in that** the explosive stud (24) is made of a first part (26) tightly connected to a rigid bearing member and a second part (28) separated upon activation of the explosive stud (24), wherein the part (28) separated upon activation of the explosive stud (24) is arranged outside the airbag module.

6. The airbag module according to claim 2 or according to claim 2 in connection with any one of the preceding claims 3 or 4, **characterized in that** the mounting strap (56) extends in V-shape when the airbag (12) is inflated.

7. The airbag module according to any one of the preceding claims, **characterized in that** the fold is formed **in that** opposed portions of the wall are adjacent to each other and that the holding means keeps the opposed portions adjacent to each other.

8. The airbag module according to any one of the preceding claims 2, 3, 4 to 7, **characterized in that** the holding means includes an explosive stud (24) and that the explosive stud (24) is made of a first part (26) tightly connected to a rigid bearing member and a second part (28) separated upon activation of the explosive stud (24), the part (28) separated upon activation of the explosive stud (24) being arranged outside the airbag module.

9. The airbag module according to any one of the preceding claims, **characterized in that** the holding means includes a string (70) detachably fastened to a rigid bearing member.

10. The airbag module according to claim 9, **characterized in that** the string (70) forms a loop (72) through which the mounting strap (56) is guided.

11. The airbag module according to claim 10, **characterized in that** the loop (72) is guided around a drive means (76) fastened to a rigid bearing member.

12. The airbag module according to claim 11, **characterized in that** the holding means includes a clamping means (80) for the string (70) which prevents the string (70) from slipping along the drive means (76).

13. The airbag module according to any one of the claims 9 to 12, **characterized in that** the airbag wall in the first state of the airbag (12) includes plural folds (22) each having at least one orifice (30) for each airbag layer through which the string (70) is guided.

14. The airbag module according to claim 12 or 13, **characterized in that** the clamping means (80) is formed integrally with an igniter (82) of an inflator (14).

15. The airbag module according to any one of the claims 9 to 14, **characterized in that** the bearing member is the housing (74) of an inflator (14) or an inflator carrier of the airbag module.

16. The airbag module according to any one of the preceding claims 2 to 15, **characterized in that** the holding means includes a drive means, preferably a pyrotechnical drive means, in particular an explosive stud (24).

17. The airbag module according to any one of the preceding claims, **characterized in that** in the second state a lower internal pressure is prevailing in the deployed airbag (12) than in the first state and/or in the second state a larger volume is provided than in the first state.

## Revendications

1. Module airbag comprenant
un coussin gonflable (12), dont la paroi dans un premier état du coussin gonflable(12) possède au moins un pli (22), et dont le pli (22) est fixé par un moyen de retenue,
pour lequel ledit moyen de retenue est libérable par un signal, de sorte que le coussin à gaz (12) passe à un second état pour lequel le pli (22) est ouvert,
pour lequel ledit moyen de retenue comprend une bande de fixation (56) qui maintient le pli (22) dans le premier état du coussin à gaz (12),
**caractérisé en ce qu'**une extrémité de la bande de fixation (56) est fixée par un boulon explosif (24) sur un côté extérieur du module airbag, et qu'une autre extrémité de la bande de fixation (56) est reliée à la paroi du coussin gonflable (12).

2. Module airbag comprenant
un coussin gonflable (12), dont la paroi possède dans un premier état du coussin gonflable (12) au moins un pli (22), et dont le pli (22) est fixé par un moyen de retenue, pour lequel ledit moyen de retenue est libérable par un signal, de sorte que le coussin à gaz (12) passe à un second état pour lequel le pli (22) est ouvert, pour lequel ledit moyen de retenue comprend une bande de fixation (56) qui maintient le pli (22) dans le premier état du coussin gonflable(12),
**caractérisé en ce que** la bande de fixation (56) est reliée à ses deux extrémités à la paroi du coussin gonflable (12), pour lequel les points de fixation (66) sont séparés spatialement l'un de l'autre.

3. Module airbag selon les revendications 1 ou 2, **caractérisé en ce que** le moyen de retenue comprend un moyen d'entraînement, lequel est intégré dans un générateur de gaz à plusieurs étages (14).

4. Module airbag selon la revendication 3, **caractérisé en ce que**, lors de l'allumage d'un certain étage du générateur de gaz (14), le ruban de fixation (56) est au moins partiellement détruite.

5. Module airbag selon la revendication 1 ou la revendication 1 avec l'une quelconque des revendications précédentes 3 ou 4, **caractérisé en ce que** le boulon explosif (24) se compose d'une première pièce (26) reliée rigidement à une pièce d'appui et une seconde pièce séparable (28) lors de l'activation du boulon explosif (24), pour lequel la partie séparable (28) lors de l'activation du boulon explosif (24) est disposée à l'extérieur du module airbag.

6. Module airbag selon la revendication 2 ou la revendication 2 et l'une quelconque des revendications précédentes 3 ou 4, **caractérisé en ce que** la bande de fixation (56) s'étend en forme de V dans le coussin à gaz gonflé (12).

7. Module airbag selon l'une quelconque des revendications précédentes, **caractérisé en ce que** le pli est formé de sorte que les sections opposées de la paroi se situent l'une contre l'autre et que le moyen de maintien garde les sections opposées ensemble.

8. Module airbag selon l'une quelconque des revendications précédentes 2, 3, 4 à 7, **caractérisé en ce que** le moyen de retenue comprend un boulon explosif (24) et que, le boulon explosif (24) se compose d'une première pièce (26) reliée rigidement à une pièce d'appui et une seconde pièce séparable (28) lors de l'activation du boulon explosif (24), pour lequel la pièce séparable (28) lors de l'activation du boulon explosif (24) est disposée à l'extérieur du module airbag.

9. Module airbag selon l'une quelconque des revendications précédentes, **caractérisé en ce que** le moyen de maintien est un câble (70) qui est fixée de manière amovible à une pièce d'appui rigide.

10. Module airbag selon la revendication 9, **caractérisé en ce que** le câble (70) possède une boucle (72) à travers laquelle la bande de fixation (56) est guidée.

11. Module airbag selon la revendication 10, **caractérisé en ce que** la boucle (72) est guidée autour d'un moyen d'entraînement (76) fixé à une pièce d'appui rigide.

12. Module airbag selon la revendication 11, **caractérisé en ce que** le moyen de maintien comporte un moyen de serrage (80) pour le câble (70), qui empêche le glissement du câble (70) le long du moyen d'entraînement (76).

13. Module airbag selon l'une quelconque des revendications 9 à 12, **caractérisé en ce que** la paroi de coussin gonflable possède dans le premier état du coussin gonflable(12) une pluralité de plis (22), chacune avec au moins une ouverture (30) par couche de coussin gonflable, à travers laquelle le cordon (70) est guidé.

14. Module airbag selon la revendication 12 ou I3, **caractérisé en ce que** le dispositif de serrage (80) est construit d'une seule pièce avec un dispositif d'allumage (82) d'un générateur de gaz (14).

15. Module airbag selon l'une quelconque des revendications 9 à 14, **caractérisé en ce que** la zone d'appui du module airbag est le corps (74) d'un générateur de gaz (14) ou un support de générateur de gaz.

16. Module airbag selon l'une quelconque des revendications précédentes 2 à 15, **caractérisé en ce que** le moyen de maintien comprend un moyen d'entraînement, de préférence un moyen d'entraînement pyrotechnique, en particulier un boulon explosif (24).

17. Module airbag selon l'une quelconque des revendications précédentes, **caractérisé en ce que** dans le deuxième état règne une pression interne inférieure dans le coussin gonflable déployé (12) alors que dans le premier état et/ou dans le second état un volume est plus grand que dans le premier état.
